# EUROPEAN PATENT SPECIFICATION

(11) **EP 2 845 473 B1**
(45) Date of publication and mention of the grant of the patent: **21.10.2020**
(21) Application number: 14184323.5
(22) Date of filing: 10.09.2014
(51) Int. Cl.: A01K 5/00, A01K 5/02

(54) **Mixing and dosing device and movable vehicle provided with such a mixing and dosing device**
Misch- und Dosiervorrichtung und bewegbares Fahrzeug mit einer solchen Misch- und Dosiervorrichtung
Dispositif de mélange et de dosage et véhicule mobile avec un tel dispositif de mélange et de dosage

(30) Priority: 10.09.2013 NL 2011421
(43) Date of publication of application: 11.03.2015
(73) Proprietor: Sieplo B.V., 6741 PT Lunteren (NL)
(72) Inventor: Siebelink, Jan, 6741 PT Lunteren (NL); Verhoeve, Alex Cornelis, 6741 PT Lunteren (NL)
(74) Representative: Peters, Sebastian Martinus

(56) References cited:
- EP-A1- 1 021 949
- WO-A1-01/83095
- WO-A1-2007/120036
- DE-A1- 19 940 084
- DE-A1- 19 953 163

## Description

### BACKGROUND OF THE INVENTION

The invention relates to a mixer-dosing device for fodder, in particular for dosing roughage in cow-calf industry.

An example of such mixer-dosing devices are so-called mixer-dosing vehicles. Such mixer-dosing vehicles are intended for mixing various types of fodder, in particular roughage and concentrated food, such as corn, pelleted fodder, straw or a mixture thereof and releasing or discharging the fodder in a trough in for instance a stable. For that purpose known mixer-dosing vehicles comprise a dosing device with mixing auger and a separate horizontal dosing auger discharging a volume of fodder per trough. Measuring the quantity during dosing takes place by means of the volume based on parameters such as dosing time, the cross-section of the dosing auger and the speed of the dosing auger.

An alternative mixer-dosing vehicle comprises an auger device having a vertical axis of rotation and including flights for taking along and discharging the fodder. In the vertical auger device the outflow is less constant than it is in mixer-dosing vehicles using a separate dosing auger. As a consequence the measuring data about the discharged quantity based on the dosing time, the cross-section of the auger or the speed of the auger are less reliable.

Prior art mixing-dosing devices are described in DE 199 53 163 A1, WO2007/120036 A1 and EP 1 021 949 A1. It is an object of the invention to provide an alternative mixer-dosing device.

### SUMMARY OF THE INVENTION

According to a first aspect the invention provides a mixer-dosing device as specified in claim 1.

The control device is for controlling the actuator on the basis of a signal from the weighing device representing a measure for the weight of the container including fodder. The mixer-dosing device according to the invention is adapted for closing off the discharge opening when the measured weight has been reduced by a desired quantity. As a result a more accurate dose of fodder can be discharged than is the case with a discharge of fodder controlled on the basis of a discharged volume, as in the state of the art.

The closing device comprises a closure valve which is movably attached to the container, wherein the mixer-dosing device comprises an actuator that is adapted for moving the closure valve between a closed and an open position. It is noted that in the open position the closure valve need not necessarily be fully open.

The closure valve can also be placed in an intermediate position between the closed and the open position for partially closing off the discharge opening. By partially closing off the discharge opening the discharge rate of fodder is reduced as a result of which the dose can be determined more accurately.

In one embodiment the control device is adapted for at the start of the discharge placing the closure valve in the open position, and when the discharge approaches the desired weight, moving the closure valve to the intermediate position. The open position provides a 'crude dose position' of the closure valve, wherein relatively much fodder per time unit can be discharged. The intermediate position provides a 'fine dose position' of the closure valve, wherein less fodder per time unit can be discharged. Preferably the degree of opening of the closure valve in the open position and/or the intermediate position is adjustable, preferably adjustable by the user of the mixer-dosing device.

The control device is adapted for moving the closure valve to the intermediate position after a preset percentage of the desired dosed weight of fodder has been discharged. As at the start of the discharge the discharge opening is placed in the open position, the discharge can take place at a high discharge rate. After a large part of the desired weight has been discharged the closure valve is placed in the intermediate position, as a result of which the discharge opening is partially closed off and which will usually reduce the discharge rate. In that way the last part of the discharge can take place at a lower discharge rate, as a result of which stopping the discharge at the desired dosed weight can be more accurate.

In one embodiment the closure valve can be placed in several intermediate positions for partially closing off the discharge opening. In that way the closure valve can be placed in several intermediate positions during the discharge so as to close off the discharge opening further and further as the desired weight is approached.

In one embodiment the weighing device comprises a weighing frame for bearing the container and a weight sensor positioned in between the container and the weighing frame. Preferably the container is connected to the weight sensor. In that way the weight sensor has a more accurate measured value.

In one embodiment the weighing frame is adapted for being movably or detachably attached to the mobile vehicle.

In one embodiment, the weighing device is provided with a damper between the weight sensor and the weighing frame, which damper is made of a substantially flexible material. The substantially flexible material for instance comprises rubber.

In one embodiment the control device is adapted for correcting itself with regard to possibly excessively discharged fodder. For instance, from the moment of starting to close the dosing opening up to the moment the dosing opening is fully closed a quantity of fodder can still be discharged. Said quantity is also referred to as post falling weight. The control device may be adapted for determining the post falling weight of the fodder, and for correcting the desired dosing weight of a next dose by the post falling weight.

In one embodiment the fodder displacement device comprises an auger including a shaft that is rotatably attached to the container and of which a centre line of the shaft is placed substantially perpendicular to a substantially flat bottom plate of the container. This ensures a homogeneous and light composition of the fodder.

In one embodiment the auger is provided with flights that are mounted substantially perpendicular to the centre line of the shaft. Said flights ensure that the fodder is discharged through the discharge opening.

In one embodiment the outer circumference of the auger at a position close to the bottom plate is larger than at a position further removed from the bottom plate, as a result of which the fodder is transported upwards by the auger and able to fall down along the sidewalls.

According to a second aspect the invention provides a mixer-dosing vehicle comprising a mobile vehicle and a mixer-dosing device as described above or an embodiment thereof.

In one embodiment the mixer-dosing vehicle comprises a mobile undercarriage, wherein the mixer-dosing device is placed on the mobile undercarriage, preferably wherein the mobile undercarriage and the mixer-dosing device form one unity.

In one embodiment the container or the weighing frame is attached to the undercarriage so as to move, preferably so as to hinge. In that way the various electronic components can be accessed better for maintenance purposes.

In one embodiment the mixer-dosing device is detachably arranged on the mobile vehicle, wherein the mobile vehicle preferably comprises shovel loader, fork-lift truck, tractor, shovel or similar mobile vehicle.

In one embodiment the weight sensor is arranged on or integrated in a lifting arm of the mobile vehicle, a shovel loader, fork-lift truck, tractor, shovel or similar mobile vehicle. In this embodiment a weighing device of the vehicle can be used for determining the weight of the container with fodder, in particular to be used in at least one of the methods according to the invention as further described below.

In one embodiment the weighing device is placed in between the container and the mobile vehicle, in particular in between the container and the mobile undercarriage, wherein the container preferably is connected to the weight sensor.

According to a third aspect the invention provides a method as specified in claim 12

In one embodiment the discharge opening comprises a closure valve that can be placed in an open and a closed position, wherein the closure valve can also be placed in an intermediate position between the closed and the open position, in particular for partially closing off the discharge opening, wherein the control device is adapted for at the start of a discharge placing the closure valve in the open position, and if the discharge approaches the desired weight, moving the closure valve to the intermediate position.

In one embodiment the control device is adapted for moving the closure valve to the intermediate position after a preset percentage of the desired weight of fodder has been discharged.

In one embodiment the method furthermore comprises the steps of:
determining a post falling weight of the fodder, wherein the post falling weight equals the quantity of dosed fodder from the moment of starting to close the dosing opening up to the moment the dosing opening is fully closed, and
correcting the desired dosed weight of a next dose on the basis of the post falling weight.

The present disclosure further describes a mixer-dosing vehicle for mixing and discharging fodder, in particular roughage, comprising:
a mobile undercarriage,
a container for containing fodder placed on the mobile vehicle, wherein the container at least comprises a discharge opening for discharging the fodder from the container,
a fodder displacement device placed in the container for mixing the fodder in the container and/or discharging the fodder from the container,
wherein the mixer-dosing vehicle comprises a weighing device for measuring a weight of the container with fodder before, during and after discharging, wherein the weighing device is positioned between the container and the mobile undercarriage.

### SHORT DESCRIPTION OF THE DRAWINGS

The invention will be elucidated on the basis of a number of exemplary embodiments shown in the attached schematic drawings, in which:
Figure 1 shows the mixer-dosing vehicle wherein the container is placed straight-up on the mobile undercarriage;
Figure 2 shows the mixer-dosing vehicle according to figure 1 wherein the container is at an angle to the mobile undercarriage;
Figure 3 shows a mixer-dosing vehicle according to figure 1 in side view;
Figure 4 shows the mixer-dosing vehicle according to figure 1 in cross-section according to the line IV-IV in figure 3;
Figure 5A shows the mixer-dosing vehicle according to figure 1 in top view;
Figure 5B shows a displacement device in the container of the mixer-dosing vehicle according to figure 1; and
Figures 6A and 6B show a mixing container for detachable attachment to a shovel loader, fork-lift truck, tractor, shovel or similar mobile vehicle.

### DETAILED DESCRIPTION OF THE DRAWINGS

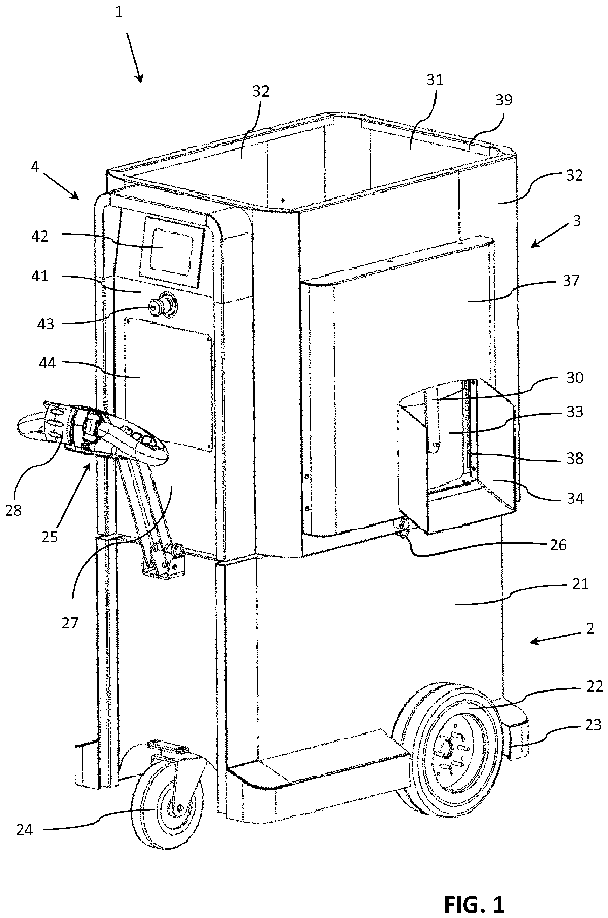

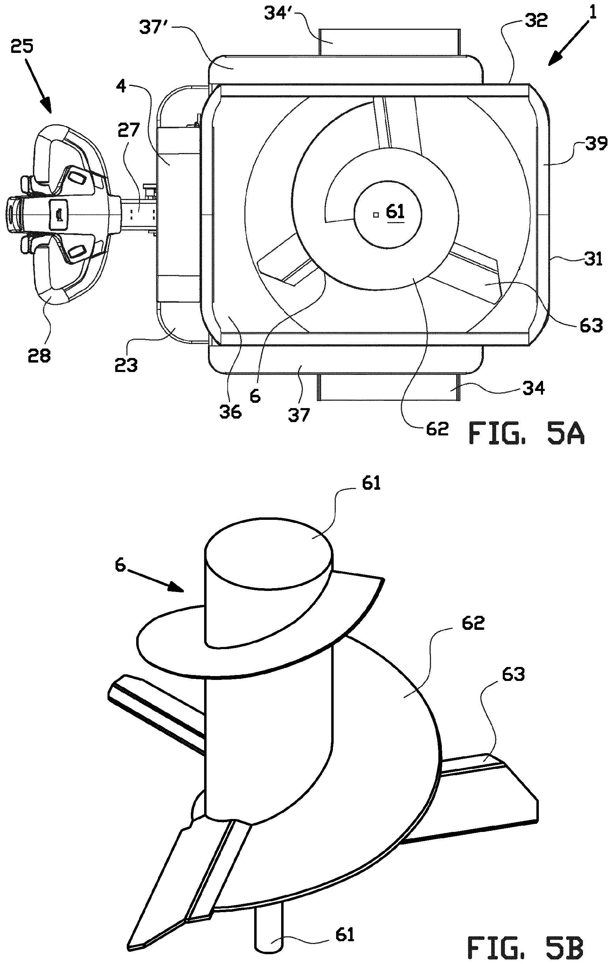

Figures 1-4 show a mixer-dosing vehicle 1, in particular for mixing fodder according to an exemplary embodiment of the invention. The mixer-dosing vehicle 1 comprises a mobile undercarriage or lower vehicle 2, a mixer-dosing device comprising a container or bin 3, for containing the fodder, a control device 4 for controlling the mixing and the release or discharge of fodder, a weighing device 5 for weighing the container 3 and the fodder in the container 3 and a mixing device or fodder displacement device 6 for mixing and releasing or discharging the fodder. The fodder displacement device 6 is shown in more detail in figure 5.

In top view the mobile undercarriage 2 has a rectangular or elongated cross-section. The undercarriage 2 comprises two drive wheels 22 which, rotatable about a common centre line of rotation, are attached to two widest sides or longitudinal sides of the mobile undercarriage 2. The undercarriage 2 is provided with a drive mechanism (not shown) for driving the drive wheels 22. The drive wheels 22 preferably are placed off centre from the longitudinal sides of the mobile undercarriage 2. The mobile undercarriage 2 is furthermore provided with a swivel castor 24 positioned spaced apart from the drive wheels 22 at a narrow side or transverse side of the mobile undercarriage 2. The swivel castor 24 is added to provide stability to the mixer-dosing vehicle 1. In an exemplary embodiment the drive wheels 22 can each be individually driven such that in mutual cooperation the drive wheels 22 make the mixer-dosing vehicle 1 controllable.

The mobile undercarriage 2 comprises a housing 21 in which the drive mechanism for the wheels 22 and an energy source or battery package 29 for feeding the various electrical components are positioned. Along the two longitudinal sides of the mobile undercarriage 2, the mobile undercarriage 2 comprises a bumper 23 counteracting damage to parts of the mixer-dosing vehicle 1 during use. The bumper 23 comprises an upper side placed at an angle to the widest sides of the mobile undercarriage, such that dirt or fodder parts can slide down from it and are not left behind. Preferably the bumper 23 is made of (stainless) steel and finished with a rubber layer.

On the transverse side, in this example the transverse side where the swivel castor 24 is positioned, the mobile undercarriage 2 comprises a steering device 25 with means for controlling the drive mechanism of the wheels 22 and for controlling or operating the fodder displacement device 6. The steering device 25 comprises a steering arm 27 and a control unit 28. The steering arm 27 is hinged to the mobile undercarriage 2. When the mixer-dosing vehicle 1 is not being used, the steering arm 27 is positioned substantially vertical so that the mixer-dosing vehicle is as compact as possible. During use the steering arm 27 is at an angle to the narrow side of the mobile undercarriage 2, so that the control unit 28 is positioned in an ergonomically advantageous manner for a user.

The container 3 for containing the roughage or fodder consists of a substantially flat bottom plate 36 and short sidewalls 31 and long sidewalls 32 upright therefrom. The sidewalls 31, 32 together form a circumferential wall of the container 3. At the upper side of the container 3, along the circumferential wall, reinforcement ribs 39 are disposed connecting the sidewalls 31, 32 to each other at the upper side and providing rigidity. At the location of connection to the long sidewalls 32, the short sidewalls 31 are provided with a curve such that it is counteracted that a part of the fodder is left behind in the corners of the container 3 during mixing resulting in the fodder not being optimally mixed.

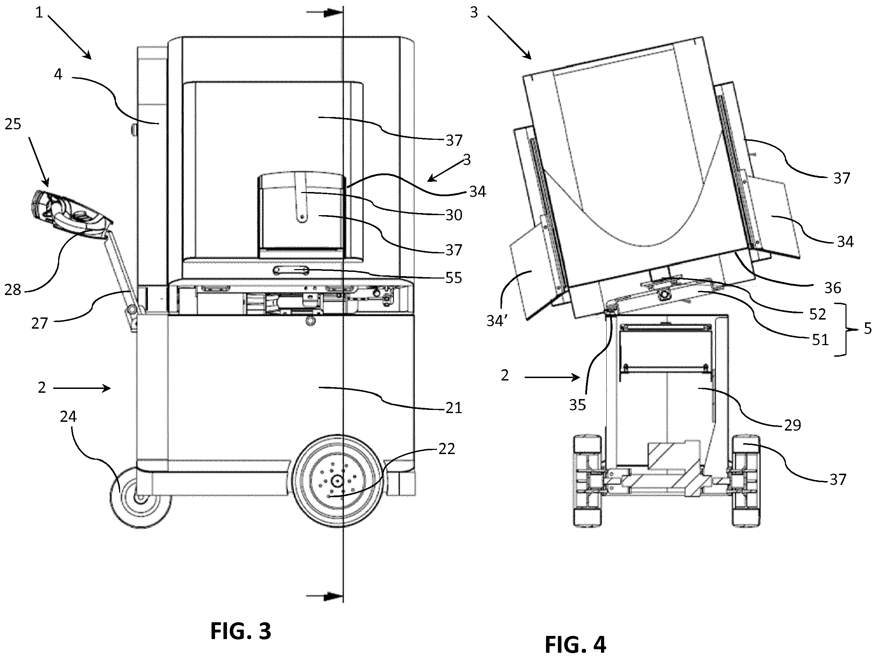

In the long sidewall 32 the container 3 comprises a dosing opening or discharge opening 38 having a substantially rectangular shape for releasing or discharging the fodder. In this example the discharge opening 38 is situated straight above the drive wheels 22. The lower side of the discharge opening 38 is substantially level with the substantially flat bottom plate 36. Preferably the container 3 comprises a discharge opening 38 in both sidewalls 32 so that the fodder can be discharged from both sides of the container 3, as schematically shown in figure 4. Along the sides and the bottom of the discharge opening 38, at the exterior of the container 3, flexible guide members 34, 34' are placed adapted for guiding the discharged fodder to a trough. In top view, the guide members 34, 34' extend from the container 3 to beyond the drive wheels 22. The flexible guide members 34, 34' preferably are made of rubber.

The discharge opening 38 can be closed off by a closing device 37. It comprises a closure valve 33 that is attached to the container 3 so as to slide. Via a rod mechanism or rod system 30 the closure valve 33 is connected to a side of an actuator, preferably a linear actuator, capable of shifting the closure valve 33 between an open position and a closed position. At another side the actuator is connected to the container 3. In the open position the closure valve 33 leaves at least a part of the discharge opening 38 open, whereas in the closed position the closure valve 33 substantially fully or fully closes off the discharge opening 38. The closure valve 33 preferably is a curved plate wherein the line of curvature is a part of a circle that is substantially concentric at an outer circumference of the fodder displacement device 6 as it is shown in figures 5A and 5B. In that way the fodder displacement device 6 is able to move closely past the closure valve 33, in which way it can be counteracted that a part of the fodder is left behind at the location of the passage opening 38 during mixing resulting in the fodder not being mixed optimally.

The mixer or fodder displacement device 6, positioned in the container 3, is adapted for aerating and mixing the fodder and discharging the fodder through the discharge opening 38. The fodder displacement device 6 comprises an auger shaft 61, an auger blade 62 and one or several flights 63. The centre line of the auger 61 is substantially perpendicular to the substantially flat bottom plate 36. The fodder displacement device 6 is mounted to the substantially flat bottom plate 36 of the container 3 so as to be rotatable about the centre line of the auger shaft 61. The auger blade 62 is fixedly mounted to the auger shaft 61. The outer circumference of the auger blade 62 reduces in the direction of the centre line of the auger shaft 61, wherein the outer circumference of the auger blade 62 close to the substantially flat bottom plate 36 of the container 3 is largest.

The one or several flights 63 are provided with a first plane and a second plane that are fixedly connected to each other and are at an inclined angle to each other. The one or several flights 63 are fixedly mounted to the auger shaft 61, wherein the first plane of at least one of the flights substantially tangentially connects to a largest plane or main plane of the auger blade 62, as schematically shown in figure 5B. The first plane of the flight extends substantially parallel to the substantially flat bottom plate 36 of the container 3 and substantially perpendicular to the auger shaft 61.

The fodder displacement device 6 is connected by means of the auger shaft 61 to a drive unit 64 situated below the substantially flat bottom plate 36 of the container 3 and that is adapted for driving the fodder displacement device 6. The drive unit 64 is electronically connected to the control device 4 and/or the control unit 28.

The control device 4 is fixedly mounted against the exterior of one of the two substantially flat short sidewalls 31 of the container 3. The control device 4 comprises a housing 41, an input and/or read out display 42, an emergency switch 43 and an electronic control system 44 that is positioned in the housing 41. The read out display 42 is placed at an angle to the substantially flat short sidewall 31 of the container 3, such that the information on the display 42 can be read better. The input and/or read out display 42 comprises an input possibility for setting the quantity of fodder to be discharged through the discharge opening 38. The input display 42 preferably is a touch screen that is electronically connected to an electronic control system 44.

The weighing device 5 for weighing the container with fodder is positioned between the container 3 and the undercarriage 2. The weighing device comprises a weighing frame 51 for bearing the container 3 and a weight sensor 52 that is connected to the container 3 and that is in electronic connection with the electronic control system 44. Between the weight sensor 52 and the weighing frame 51 substantially flexible parts or dampers may be placed for damping the motions of the undercarriage 2 with respect to the container 3, as a result of which during use the weight sensor 52 is able to obtain a more accurate measured value. The dampers preferably are fixedly connected to the weighing frame 51 and the weight sensor 53 and preferably are made of rubber.

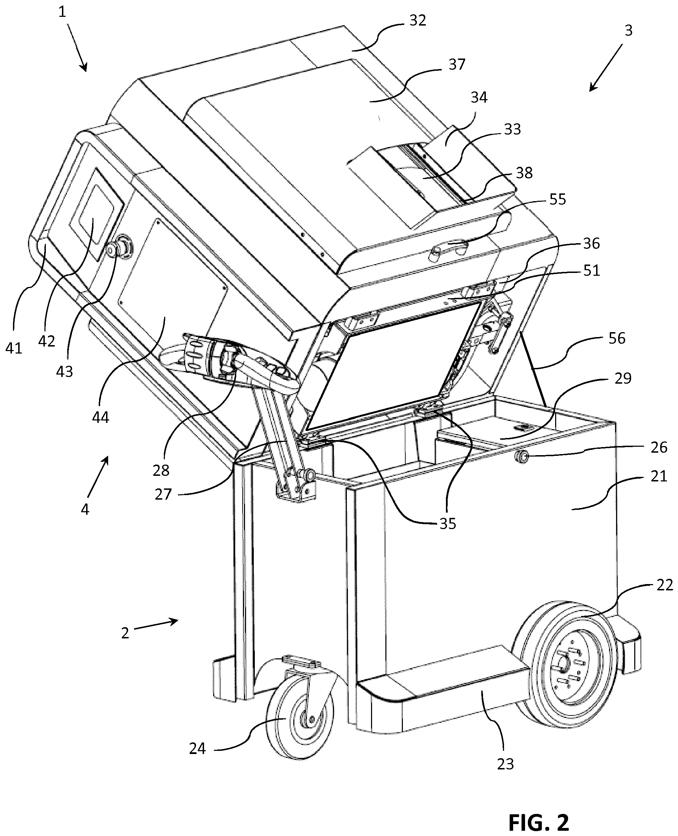

In an exemplary embodiment the weighing frame 51 is hinged to the undercarriage 2 by means of hinges 35 disposed along a longitudinal side 32 of the container 3. As a result the mixer-dosing device, and in particular the container 3, the control device 4 and the displacement device 6 thereof, can be tilted or hinged relative to the mobile undercarriage 2 between an operational position as shown in figure 1 and a maintenance position as shown in figure 2. In the open position as shown in figure 2, this ensures better accessibility of the parts of the weighing device 5, the drive mechanism of the wheels 22, the drive unit 64 of the displacement device 6 and the battery pack 29.

The mixer-dosing vehicle 1 is provided with one or several gas springs 56 which on the one side are connected to the container 3 and on the other side to the mobile undercarriage 2 and which are adapted for keeping the hinged container in the maintenance position according to figure 2. A lock 26 is adapted for locking the container 3 in the closed operational position according to figure 1. Below the discharge opening 38 on the long sidewall 32 of the container 3, on the side opposite the hinges 35 (the non-hinging side) a handle 55 is positioned for handling the container 3 during the hinging motion between the positions in figures 1 and 2.

In the following description the method for mixing and discharging fodder using the mixer-dosing vehicle 1 according to the invention will be described on the basis of figures 1-4.

In a first step of the method the container 3 is filled with fodder or a mixture of fodder. The fodder mixture may consist of various types of roughage and pelleted concentrated fodder. After filling the container 3, the drive 64 of the displacement device 6 is activated via the control unit 28 or the control device 4 so that the fodder mixture is mixed. During mixing the fodder is moved upwards along the substantially vertically placed auger shaft 61. As the outer circumference of the auger blade 62 becomes smaller from the bottom plate 36 upwards in the direction of the longitudinal centre line of the auger shaft 62, the fodder will fall down again along the sidewalls 31 and 32 in the direction of the bottom plate 36. In that way a homogenous and light mixture is created. The weight of the container 3 including the fodder is weighed by the weighing device 5 and stored in the electronic system 44 of the control device 4 as the 'initial weight'.

Before the fodder is discharged to a trough, a 'desired dosed weight' for troughs of one or several groups of livestock is set via the input display 42. Said data are electronically stored in a digital list or digital weight chart. Entering the data into the weight chart can also take place at another moment, for instance prior to filling the container 3.

By means of the control unit 28 the control of the wheels is 22 is controlled such that the mixer-dosing vehicle is moved to the wanted discharge location for a first group of livestock. As soon as the flexible members 34 of the discharge opening 38 are positioned above the trough in question, the user operates the control unit 28 as a result of which a signal is transmitted to the linear actuator and as a result of which the closure valve 33 is moved via the rod system 30 from the closed position to the open position. It is noted that in the open position the closure valve does not necessarily need to be fully open. The discharge opening 38 is thus released and the fodder displaced by the fodder displacement device 6 can be delivered or discharged.

The flights 63 of the rotating fodder displacement device 6 move the fodder mixture in the direction of the discharge opening 38 resulting in the fodder being pushed through the discharge opening 38 and via the flexible guide members 34 dropping into the trough. At the same time the mixer-dosing vehicle 1 is set into motion so that the mixer-dosing vehicle moves along the trough. The driving speed of the mixer-dosing vehicle 1 may be as much as 5 km per hour or even higher.

During discharging fodder the weight of the container and the fodder in the container is weighed repeatedly. The weighed value is registered as the 'current weight' by the electronic control system 44 of the control device 4. Subsequently the control device 4 calculates the 'discharged weight' by determining the difference between the previously determined 'initial weight' and the 'current weight' of the container 3 and the remaining fodder present in there. The electronic system 44 of the control device 4 then compares the 'discharged weight' with the 'desired dosed weight' that was entered in the weight chart for the trough in question. As soon as the 'discharged weight' substantially equals the 'desired dosed weight' for a particular trough, the electronic system 44 signals the linear actuator of the closing device 37 to close the discharge opening 38 by means of the closure valve 33.

While moving the closure valve 33 from the open to the closed position, flights 63 can still push out a limited quantity of fodder of a certain weight, the 'post falling weight', as a result of which more fodder is discharged than is set as 'desired dosed weight' in the weight chart. The weighing device communicates the 'post falling weight' to the control device 4. The control device 4 subsequently corrects the 'desired dosed weight' for a next dosing round by the 'post falling weight' by subtracting the 'post falling weight' from the 'desired dosed weight'. The corrected 'desired dosed weight' and the 'post falling weight' will come closer to the original 'desired dosed weight' in the next dosing round. For each new dosing round the 'initial weight' is determined on the basis of the remaining weight of the container 3 and the fodder present in there.

In an alternative method for mixing and discharging fodder using the mixer-dosing vehicle 1 the closure valve 33 can also be placed in an intermediate position between the closed and open position, in particular for partially closing off the discharge opening 38. The open position provides a 'crude dose position' of the closure valve 33, wherein relatively much fodder per time unit is discharged. It is noted here that the closure valve 33 in the open position does not necessarily have to be fully open. The intermediate position provides a 'fine dose position' of the closure valve 33, wherein less fodder per time unit is discharged. The degree of opening of the closure valve 33 in the open position and/or the intermediate position can be adjusted, and can be entered in the control device 4 by the user of the mixer-dosing device.

At the start of discharging fodder from the discharge opening 38, the control device will place the closure valve 33 in the open position or 'crude dose position'. When the 'discharged weight' has reached a preset percentage of the 'desired dosed weight', the control device will place the closure valve 33 in the intermediate position or 'fine dose position'. In said intermediate position the closure valve 33 closes off a larger part of the discharge opening 38 than it does in the open position. By partially closing off the discharge opening 38 the discharge rate of the fodder is reduced as a result of which the dosing of the fodder can be more accurately determined.

As at the start of the discharge the discharge opening 38 is placed in the open position, the discharge can take place at a high discharge rate. After a large part of the desired dosed weight has been discharged the closure valve 33 is placed in the intermediate position, as a result of which the discharge opening 38 is partially closed off which will usually reduce the discharge rate. In that way the last part of the discharge can take place at a lower discharge rate, as a result of which stopping the discharge at the desired dosed weight can be more accurate.

The control device 4 can for instance be set for moving the closure valve 33 from the open position to the intermediate position after 50% of the desired dosed weight of fodder has been discharged, or after 70% of the desired dosed weight has been discharged, or after 80% of the desired dosed weight has been discharged. The percentage at which the closure valve 33 is moved to the intermediate position may be set depending on the type of fodder and/or the quantity of the desired dosed weight of fodder. Optionally a 'post falling weight', as described above, can be taken into account.

In a further development the closure valve 33 can be placed in several intermediate positions for partially closing off the discharge opening 38. In that way the closure valve 33 can be placed in several intermediate positions during discharge in order to close off the discharge opening further and further as the desired dosed weight is approached.

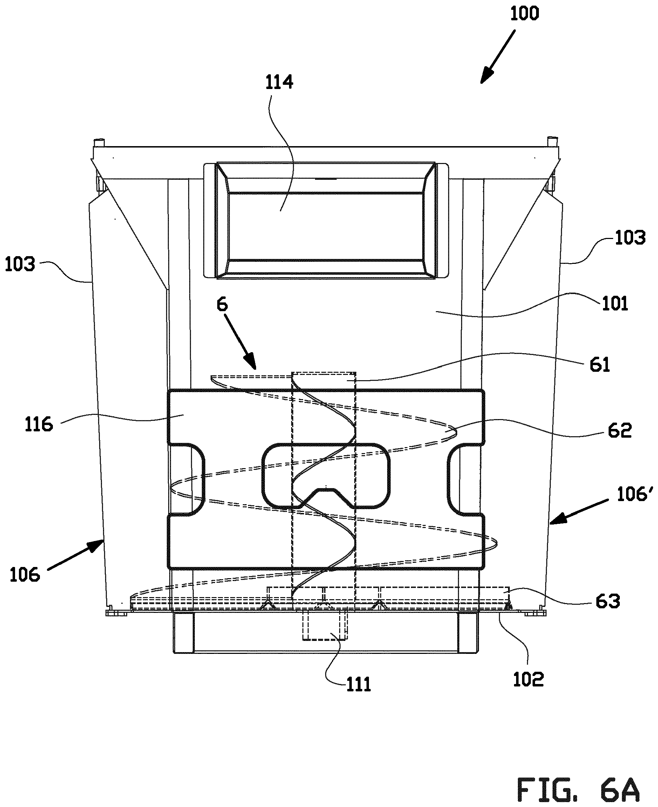

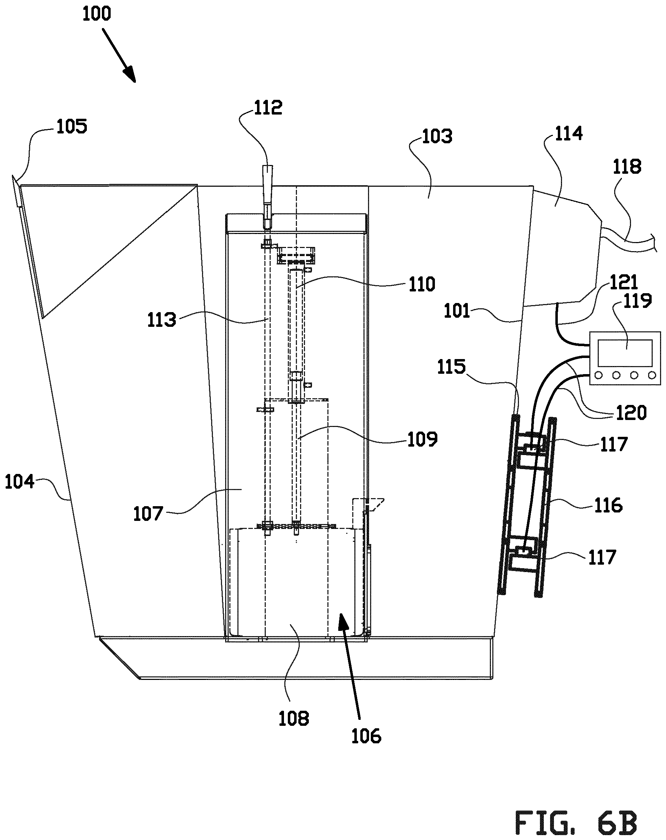

The mixer-dosing device according to the invention can also be placed on a shovel loader, fork-lift truck, tractor, shovel or similar mobile vehicle. For such a use a mixer-dosing container has been developed that can detachably be placed on a lifting arm of the shovel loader, fork-lift truck, tractor, shovel or similar mobile vehicle. An example of such a mixer-dosing container is shown in figures 6A and 6B.

Figure 6A shows a view of the mixer-dosing container 100 at a rear wall 101 with which the mixer-dosing container 100 can be coupled to the lifting arm (not shown). The fodder displacement device 6 in the mixer-dosing container 100 is schematically indicated with dotted lines and has a design that is similar or the same as the fodder displacement device 6 as shown in figure 5B. Figure 6B shows a side view of the mixer-dosing container 100 of figure 6A.

The mixer-dosing container 100 is adapted for containing roughage or fodder, and consists of a substantially flat bottom plate 102 and rear wall 101, sidewalls 103 and front wall 104 standing upright therefrom. Said walls 101, 103, 104 together form a circumferential wall of the container 100. The front wall 104 of the container 100 is provided with a scooping edge 105 along an upper edge facing away from the bottom plate 102.

The sidewalls 103 of the mixer-dosing container 100 are provided with a dosage opening or discharge opening 106, 106' having a substantially rectangular shape for releasing or discharging fodder. The discharge openings 106, 106' are substantially flush with the substantially flat bottom plate 102.

Each discharge opening 106 can be closed off by a closing device 107. The closing device 107 is placed between the sidewall 103 and an exterior wall and as such cannot be seen from the outside of the mixer-dosing container 100. The elements of the closing device 107 are therefore indicated in dotted lines in figure 6B. The closing device 107 comprises a closure valve 108 that is attached to the container 100 so as to slide. Via a rod mechanism or rod system 109 the closure valve 108 is connected to an actuator 110, preferably a hydraulic actuator that can be connected to a hydraulic system of the shovel loader, fork-lift truck, tractor, shovel or similar mobile vehicle.

By operating the hydraulic actuator 110 the closure valve 108 can be shifted between an open position and a closed position. Preferably the closure valve 108 can also be placed in one or more intermediate positions wherein the closure valve 108 takes up a position between the open position and the closed position. In the open position the closure valve 108 leaves at least a part of the discharge opening 106 open, whereas in the closed position the closure valve 108 substantially fully or fully closes off the discharge opening 106.

An indicator 112 is furthermore placed at each dosage opening or discharge opening 106, 106' which indicator by means of a connecting rod 113 is connected to the closure valve 108. When moving the closure valve 108 by the linear actuator 110, the indicator 112 is moved along with the connecting rod 113. The position of the indicator 112 shows the driver of the shovel loader, fork-lift truck, tractor, shovel or similar mobile vehicle whether the discharge opening 106, 106' related to the indicator 112 is opened or closed.

The mixer or fodder displacement device 6 positioned in the container 100 is adapted for aerating and mixing the fodder and discharging the fodder through the discharge opening 106, 106'. The displacement device 6 comprises an auger shaft 61, an auger blade 62 and one or several flights 63. The centre line of the auger shaft 61 is substantially perpendicular to the substantially flat bottom plate 102. The displacement device 6 is mounted to the substantially flat bottom plate 102 of the container 100 so as to rotate about the centre line of the auger shaft 61. The auger blade 62 is fixedly mounted to the auger shaft 61. The outer circumference of the auger blade 62 reduces in the direction of the centre line of the auger shaft 61, wherein the outer circumference of the auger blade 62 is largest near the substantially flat bottom plate 102 of the container 100, as schematically shown in figure 6A.

By means of the auger shaft 61 the fodder displacement device 6 is connected to a drive unit 111 that is adapted for driving the fodder displacement device 6. The drive unit 111 may comprise a hydraulic drive that can be connected to a hydraulic system of the shovel loader, fork-lift truck, tractor, shovel or similar mobile vehicle.

The various hydraulic actuators 110, 111 in the mixer-dosing container 100 are connected to switch elements or valves that are arranged together in a switch system 114. By switching the switch elements, the various hydraulic actuators 110, 111 can be individually controlled. The hydraulic switch system is furthermore provided with a central hydraulic connection 118 that can be connected to a central hydraulic system of the shovel loader, fork-lift truck, tractor, shovel or similar mobile vehicle.

The weighing device for weighing the container with fodder comprises a first coupling plate 115 that is fixedly connected to the rear wall 101, a second coupling plate 116 that is adapted for being coupled to a lifting arm of the shovel loader, fork-lift truck, tractor, shovel or similar mobile vehicle. Between the first coupling plate 115 and the second coupling plate 117 one or more weighing cells 117 are placed, such that the weight of the container with fodder rests on the weighing cells 117, at least when the mixer-dosing container 100 is lifted by the lifting arm of the shovel loader, fork-lift truck, tractor, shovel or similar mobile vehicle. The one or more weighing cells 117 are connected 120 to the control device 119.

In an alternative embodiment (not shown) the weighing device 115, 116, 117 can also be a part of the lifting arm of the shovel loader, fork-lift truck, tractor, shovel or similar mobile vehicle. In that case the second coupling plate 116 is fixedly connected to the lifting arm and the mixer-dosing container 100 can be detachably coupled to the first coupling plate 115.

The control device 119 is connected to the mixer-dosing container 100 via a cable assembly 120, 121, and can be placed in the shovel loader, fork-lift truck, tractor, shovel or similar mobile vehicle so that it can be read out and/or operated by the driver of the vehicle. Via a connecting cable 121 the control device 119 is connected to the switch system 114 for controlling the various hydraulic actuators 110, 111 in the mixer-dosing container 100. The control device 119 is adapted for and/or provided with a computer program for at an adjustable 'desired dosed weight' accurately dosing the fodder from the container, preferably according to the method(s) described above for mixing and discharging fodder using the mixer-dosing vehicle according to the invention.

The above description is included to illustrate the operation of preferred embodiments of the invention and not to limit the scope of the invention.

## Claims

1. Mixer-dosing device for mixing and discharging fodder, wherein the mixer-dosing device is adapted to be arranged on or at a mobile vehicle, wherein the mixer-dosing device comprises a container (3, 100) for containing the fodder, wherein the container at least comprises a discharge opening (38, 106) for discharging the fodder from the container, a fodder displacement device (6) placed in the container for mixing the fodder in the container and displacing the fodder to the discharge opening, wherein the discharge opening comprises a movable closing device (37, 107) driven by an actuator (110) for closing off and opening the discharge opening, wherein the mixer-dosing device comprises a weighing device (5, 117) for measuring a weight of at least the container with fodder, and wherein the weighing device is connected to a control device (4, 119) for controlling the actuator on the basis of the weight measured,
wherein the mixer-dosing device is adapted for closing off the discharge opening when the measured weight has been reduced by a desired dosed weight, wherein the closing device comprises a closure valve (33, 108) which is movably attached to the container and comprises an actuator which is adapted for moving the closure valve between a closed and an open position, **characterized in that** the closure valve can also be placed in an intermediate position between the closed and the open position, for partially closing off the discharge opening, wherein the control device (4) is adapted for placing the closure valve (33) in the intermediate position after a pre-set percentage of the desired weight of fodder has been discharged.

2. Mixer-dosing device according to claim 1, wherein the control device (4) is adapted for at the start of a discharge moving the closure valve (33) to the open position, and when the discharge approaches the desired weight, placing the closure valve (33) in the intermediate position.

3. Mixer-dosing device according to claim 1 or 2, wherein the control device is arranged to adjust the degree of opening of the closure valve (33) in the open position and/or the intermediate position, which degree of opening can be entered in the control device by a user of the mixer-dosing device.

4. Mixer-dosing device according to any one of the preceding claims, wherein the weighing device comprises a weighing frame (51, 116) for bearing the container and a weight sensor (52, 117) positioned in between the container and the weighing frame, wherein the weighing frame preferably is adapted for being movably or detachably attached to the mobile vehicle, and wherein between the weight sensor and the weighing frame the weighing device preferably is provided with a damper of a substantially flexible material.

5. Mixer-dosing device according to any one of the preceding claims, wherein the control device corrects itself with regard to possibly excessively discharged fodder.

6. Mixer-dosing device according to any one of the preceding claims, wherein the fodder displacement device comprises an auger (62) including a shaft (61) that is rotatably attached to the container and of which a centre line of the shaft is placed substantially perpendicular to a substantially flat bottom plate of the container, wherein the auger preferably is provided with flights that are mounted substantially perpendicular to the centre line of the shaft, and wherein an outer circumference of the auger at a position close to the bottom plate preferably is larger than at a position further removed from the bottom plate.

7. Mixer-dosing vehicle comprising a mobile vehicle and a mixer-dosing device according to any one of the preceding claims.

8. Mixer-dosing vehicle according to claim 7, wherein the mobile vehicle comprises a mobile undercarriage (2) and wherein the mixer-dosing device is placed on the mobile undercarriage, preferably wherein the mobile undercarriage and the mixer-dosing device form one unity, wherein the container or the weighing frame preferably is hinged to the undercarriage.

9. Mixer-dosing vehicle according to claim 7, wherein the mixer-dosing device is detachably arranged on the mobile vehicle, and wherein the mobile vehicle comprises a shovel loader, fork-lift truck, tractor, shovel or similar mobile vehicle.

10. Mixer-dosing vehicle according to claim 9, wherein the weight sensor is arranged on or integrated in a lifting arm of the mobile vehicle, a shovel loader, fork-lift truck, tractor, shovel or similar mobile vehicle.

11. Mixer-dosing vehicle according to claim 7, 8 or 9, wherein the container is connected to the weight sensor.

12. Method for dosing fodder using a mixer-dosing device or mixer-dosing vehicle according to any one of the preceding claims, **characterized in that** the method for dosing comprises the following steps:
setting a desired dosed weight of fodder to be discharged;
determining the initial weight of the container including fodder;
mixing the fodder using the fodder displacement device;
opening the discharge opening and discharging fodder from the discharge opening;
determining the dosed weight on the basis of a current weight and the initial weight, wherein the dosed weight equals the initial weight minus the current weight;
placing the closure valve in the intermediate position when the dosed weight has reached a pre-set percentage of the desired dose weight;
closing off the discharge opening when the actually dosed weight equals the desired dosed weight.

13. Method according to claim 12, wherein the method furthermore comprises the steps of:
determining a post falling weight of the fodder, wherein the post falling weight equals the quantity of dosed fodder from the moment of starting to close the dosing opening up to the moment the dosing opening is fully closed, and
correcting the desired dosed weight of a next dose on the basis of the post falling weight.

## Patentansprüche

1. Eine Misch- und Dosiervorrichtung zum Mischen und Abgeben von Futter, wobei die Misch- und Dosiervorrichtung dafür ausgelegt ist, auf oder an einem bewegbaren Fahrzeug angebracht zu werden, wobei die Misch- und Dosiervorrichtung einen Behälter (3, 100) zur Aufnahme des Futters umfasst, wobei der Behälter wenigstens eine Abgabeöffnung (38, 106) zur Abgabe des Futters aus dem Behälter und eine Futterverlagerungvorrichtung in (6) innerhalb des Behälters zum Mischen des Futters in dem Behälter und zum Verschieben des Futters zu der Abgabeöffnung umfasst, wobei die Abgabeöffnung eine bewegliche Schließvorrichtung (37, 107) umfasst, die durch einen Motor (110) angetrieben wird, um die Abgabeöffnung zu schließen und zu öffnen, wobei die Misch- und Dosiervorrichtung eine Wiegevorrichtung (5, 117) zum Messen eines Gewichts von wenigstens dem Behälter mit Futter umfasst, und wobei die Wiegevorrichtung mit einer Kontrollvorrichtung (4, 119) verbunden ist, die den Motor auf Basis des gemessenen Gewichts regelt, wobei die Misch- und Dosiervorrichtung dafür ausgelegt ist, die Abgabeöffnung zu schließen, sobald das gemessene Gewicht um ein gewünschtes Dosiergewicht verringert wurde, wobei die Schließvorrichtung ein beweglich an dem Behälter angebrachtes Schließklappe (33 ,108) und einen Motor umfasst, wobei der Motor dafür ausgelegt ist, die Schließklappe zwischen einer geschlossenen oder einer offenen Position zu bewegen, **dadurch gekennzeichnet, dass** die Schließklappe auch eine Zwischenposition zwischen der verschlossenen und der offenen Position einnehmen kann, um die Ausgabeöffnung partiell zu schließen, wobei die Kontrollvorrichtung (4) dafür ausgelegt ist, die Schließklappe (33) in die Zwischenposition zu bewegen, nachdem eine vorher bestimmte prozentuale Menge des gewünschten Gewichts des Futters abgegeben wurde.

2. Die Misch- und Dosiervorrichtung gemäß Anspruch 1, wobei die Kontrollvorrichtung (4) dafür ausgelegt ist, zu Beginn einer Abgabe die Schließklappe (33) in die offene Position zu bewegen, und sobald die Abgabemenge das gewünschte Gewicht erreicht hat, die Schließklappe (33) in die Zwischenposition zu bewegen.

3. Die Misch- und Dosiervorrichtung gemäß einem der Ansprüche 1 oder 2, wobei die Kontrollvorrichtung dafür ausgelegt ist, den Öffnungsgrad der Schließklappe (33) in der offenen Position und/oder der Zwischenposition anzupassen, wobei der Öffnungsgrad durch einen Benutzer der Misch- und Dosiervorrichtung in die Kontrollvorrichtung eingegeben werden kann.

4. Die Misch- und Dosiervorrichtung gemäß einem der vorherigen Ansprüche, wobei die Wiegevorrichtung einen Wiegerahmen (51, 116) zum Tragen des Behälters und einen zwischen dem Behälter und dem Wiegerahmen angeordneten Gewichtssensor (52, 117) umfasst, wobei der Wiegerahmen vorzugsweise dafür ausgelegt ist, beweglich oder abnehmbar an dem beweglichen Fahrzeug angebracht zu sein, und wobei die Wiegevorrichtung zwischen dem Gewichtssensor und dem Wiegerahmen vorzugsweise mit einem Dämpfer aus im Wesentlichen flexiblen Material ausgestattet ist.

5. Die Misch- und Dosiervorrichtung gemäß einem der vorherigen Ansprüche, wobei die Kontrollvorrichtung sich selbst bezüglich möglicherweise überschüssig abgegebenem Futter korrigiert.

6. Die Misch- und Dosiervorrichtung gemäß einem der vorherigen Ansprüche, wobei die Futterverlagerungvorrichtung eine Schnecke (62), die eine Welle (61) enthält, umfasst, die rotierbar an dem Behälter angebracht ist, und von der eine zentrale Linie der Welle im Wesentlichen senkrecht zu einer im Wesentlichen flachen Bodenplatte des Behälters ausgerichtet ist, wobei die Schnecke vorzugsweise mit Flügeln versehen ist, die im Wesentlichen senkrecht zu der zentralen Linie der Welle angebracht sind, und wobei der äußere Umfang der Schnecke an einer Position nahe der Bodenplatte vorzugsweißer größer ist als an einer Position, die sich weiter von der Bodenplatte entfernt befindet.

7. Ein Misch- und Dosierfahrzeug umfassend ein bewegliches Fahrzeug und eine Misch- und Dosiervorrichtung gemäß einem der vorherigen Ansprüche.

8. Das Misch- und Dosierfahrzeug gemäß Anspruch 7, wobei das bewegliche Fahrzeug ein bewegliches Fahrwerk (2) umfasst, und wobei die Misch- und Dosiervorrichtung auf dem beweglichen Fahrwerk angebracht ist, wobei vorzugsweise das mobile Fahrwerk und die Misch- und Dosiervorrichtung eine Einheit bilden, wobei vorzugsweise der Behälter oder der Wiegerahmen an dem Fahrwerk klappbar aufgehängt ist.

9. Das Misch- und Dosierfahrzeug gemäß Anspruch 7, wobei die Misch- und Dosiervorrichtung entfernbar auf dem beweglichen Fahrzeug angeordnet ist und wobei das bewegliche Fahrzeug einen Schaufellader, Gabelstapler, Traktor, Löffelbagger oder ein ähnliches bewegliches Fahrzeug umfasst.

10. Das Misch- und Dosierfahrzeug gemäß Anspruch 9, wobei der Gewichtssensor an einem Hebearm des beweglichen Fahrzeugs, wie einem Schaufellader, Gabelstapler, Traktor, Löffelbagger oder einem ähnlichen beweglichen Fahrzeug, angebracht ist oder in diesem integriert ist.

11. Das Misch- und Dosierfahrzeug gemäß einem der Ansprüche 7, 8 oder 9, wobei der Behälter mit dem Gewichtssensor verbunden ist.

12. Ein Verfahren zum Dosieren von Futter unter Verwendung einer Misch- und Dosiervorrichtung oder einem Misch- und Dosierfahrzeug gemäß einem der vorherigen Ansprüchen, **dadurch gekennzeichnet, dass** das Verfahren zum Dosieren die folgenden Schritte umfasst:
das Festlegen eines gewünschten Dosiergewichts von Futter, das abgegeben werden soll,
das Bestimmen des Anfangsgewichts des Containers einschließlich des Futters,
das Mischen des Futters unter Verwendung der Futterverlagerungvorrichtung,
das Öffnen der Abgabeöffnung und die Abgabe des Futters aus der Abgabeöffnung,
das Bestimmen des Dosiergewichts auf Basis eines Ist-Gewichts und des Anfangsgewichts, wobei das Dosiergewicht gleich dem Anfangsgewicht abzüglich des Ist-Gewichts ist,
das Bewegen der Schließklappe in die Zwischenposition, sobald das Dosiergewicht einen vorherbestimmten Prozentsatz des gewünschten Dosiergewichts erreicht hat,
das Schließen der Abgabeöffnung, sobald das Dosiergewicht gleich dem gewünschten Dosiergewicht ist.

13. Das Verfahren gemäß Anspruch 12, wobei das Verfahren zusätzlich die Schritte umfasst:
das Bestimmen eines Überschussgewichts des Futters, wobei das Überschussgewicht gleich der Menge von dosiertem Futter von dem Moment des Beginns des Schließens der Dosieröffnung bis zu dem Moment ist, in der die Dosieröffnung vollständig geschlossen ist, und
das Korrigieren des gewünschten Dosiergewichts bei einer nächsten Abgabe auf Basis des Überschussgewichts.

## Revendications

1. Dispositif de mélange et de dosage pour mélanger et décharger du fourrage, dans lequel le dispositif de mélange et de dosage est adapté pour être agencé sur ou au niveau d'un véhicule mobile, dans lequel le dispositif de mélange et de dosage comprend un conteneur (3, 100) pour contenir le fourrage, dans lequel le conteneur comprend au moins une ouverture de décharge (38, 106) pour décharger le fourrage du conteneur, un dispositif de déplacement de fourrage (6) placé dans le conteneur pour mélanger le fourrage dans le conteneur et déplacer le fourrage vers l'ouverture de décharge, dans lequel l'ouverture de décharge comprend un dispositif de fermeture mobile (37, 107) entraîné par un actionneur (110) pour fermer et ouvrir l'ouverture de décharge, dans lequel le dispositif de mélange et de dosage comprend un dispositif de pesage (5, 117) pour mesurer un poids au moins du conteneur avec le fourrage, et dans lequel le dispositif de pesage est raccordé à un dispositif de commande (4, 119) pour commander l'actionneur sur la base du poids mesuré, dans lequel le dispositif de mélange et de dosage est adapté pour fermer l'ouverture de décharge lorsque le poids mesuré a été réduit par un poids dosé souhaité, dans lequel le dispositif de fermeture comprend un clapet de fermeture (33, 108) qui est fixé de manière mobile sur le conteneur et comprend un actionneur qui est adapté pour déplacer le clapet de fermeture entre une position fermée et une position ouverte, **caractérisé en ce que** le clapet de fermeture peut également être placé dans une position intermédiaire entre la position fermée et la position ouverte, pour fermer partiellement l'ouverture de décharge, dans lequel le dispositif de commande (4) est adapté pour placer le clapet de fermeture (33) dans la position intermédiaire après qu'un pourcentage préétabli du poids souhaité de fourrage a été déchargé.

2. Dispositif de mélange et de dosage selon la revendication 1, dans lequel le dispositif de commande (4) est adapté pour, au début d'une décharge, déplacer le clapet de fermeture (33) dans la position ouverte, et lorsque la décharge s'approche du poids souhaité, placer le clapet de fermeture (33) dans la position intermédiaire.

3. Dispositif de mélange et de dosage selon la revendication 1 ou 2, dans lequel le dispositif de commande est agencé pour ajuster le degré d'ouverture du clapet de fermeture (33) dans la position ouverte et/ou la position intermédiaire, lequel degré d'ouverture peut être entré dans le dispositif de commande par un utilisateur du dispositif de mélange et de dosage.

4. Dispositif de mélange et de dosage selon l'une quelconque des revendications précédentes, dans lequel le dispositif de pesage comprend un cadre de pesée (51, 116) pour supporter le conteneur et un capteur de poids (52, 117) positionné entre le conteneur et le cadre de pesée, dans lequel le cadre de pesée est de préférence adapté pour être fixé de manière mobile ou détachable au véhicule mobile, et dans lequel entre le capteur de poids et le cadre de pesée, le dispositif de pesage est de préférence prévu avec un amortisseur réalisé avec un matériau sensiblement flexible.

5. Dispositif de mélange et de dosage selon l'une quelconque des revendications précédentes, dans lequel le dispositif de commande corrige de lui-même par rapport au fait de décharger du fourrage de manière excessive.

6. Dispositif de mélange et de dosage selon l'une quelconque des revendications précédentes, dans lequel le dispositif de déplacement de fourrage comprend une vis sans fin (62) comprenant un arbre (61) qui est fixé en rotation au conteneur et dont une ligne centrale de l'arbre est placée sensiblement perpendiculairement à une plaque inférieure sensiblement plate du conteneur, dans lequel la vis sans fin est prévue avec des déflecteurs qui sont montés sensiblement perpendiculairement à la ligne centrale de l'arbre, et dans lequel une circonférence externe de la vis sans fin dans une position à proximité de la plaque inférieure est de préférence plus importante que dans une position plus éloignée de la plaque inférieure.

7. Véhicule de mélange et de dosage comprenant un véhicule mobile et un dispositif de mélange et de dosage selon l'une quelconque des revendications précédentes.

8. Véhicule de mélange et de dosage selon la revendication 7, dans lequel le véhicule mobile comprend un châssis de roulement mobile (2) et dans lequel le dispositif de mélange et de dosage est placé sur le châssis de roulement mobile, de préférence dans lequel le châssis de roulement mobile et le dispositif de mélange et de dosage forment une unité, dans lequel le conteneur ou le cadre de pesée est de préférence articulé par rapport au châssis de roulement.

9. Véhicule de mélange et de dosage selon la revendication 7, dans lequel le dispositif de mélange et de dosage est agencé de manière détachable sur le véhicule mobile, et dans lequel le véhicule mobile comprend une chargeuse pelleteuse, un chariot élévateur à fourche, un tracteur, une pelleteuse ou un véhicule mobile similaire.

10. Véhicule de mélange et de dosage selon la revendication 9, dans lequel le capteur de poids est agencé sur ou intégré dans un bras de levage du véhicule mobile, une chargeuse pelleteuse, un chariot élévateur à fourche, un tracteur, une pelleteuse ou un véhicule mobile similaire.

11. Véhicule de mélange et de dosage selon la revendication 7, 8 ou 9, dans lequel le conteneur est raccordé au capteur de poids.

12. Procédé pour doser du fourrage en utilisant un dispositif de mélange et de dosage ou un véhicule de mélange et de dosage selon l'une quelconque des revendications précédentes, **caractérisé en ce que** le procédé de dosage comprend les étapes suivantes consistant à :
établir un poids dosé souhaité du fourrage à décharger ;
déterminer le poids initial du conteneur, contenant le fourrage ;
mélanger le fourrage en utilisant le dispositif de déplacement de fourrage ;
ouvrir l'ouverture de décharge et décharger le fourrage par l'ouverture de décharge ;
déterminer le poids dosé sur la base d'un poids courant et du poids initial, dans lequel le poids dosé est égal au poids initial moins le poids courant ;
placer le clapet de fermeture dans la position intermédiaire lorsque le poids dosé a atteint un pourcentage préétabli du poids dosé souhaité ;
fermer l'ouverture de décharge lorsque le poids véritablement dosé est égal au poids dosé souhaité.

13. Procédé selon la revendication 12, dans lequel le procédé comprend en outre les étapes consistant à :
déterminer un poids après chute du fourrage, dans lequel le poids après chute est égal à la quantité de fourrage dosé à partir du moment du début de la fermeture de l'ouverture de dosage jusqu'au moment où l'ouverture de dosage est complètement fermée, et
corriger le poids dosé souhaité d'une prochaine dose sur la base du poids après chute.
